# EUROPÄISCHE PATENTANMELDUNG

(11) **EP 3 193 011 A1**
(43) Veröffentlichungstag der Anmeldung: **19.07.2017**
(21) Anmeldenummer: 17151171.0
(22) Anmeldetag: 12.01.2017
(51) Int. Cl.: F03D 1/06, F16B 35/04, F03D 15/00

(54) **VERFAHREN ZUM HERSTELLEN EINER FLANSCHVERBINDUNG, VERWENDUNG, FLANSCHVERBINDUNG UND WINDENERGIEANLAGE**

(30) Priorität: 15.01.2016 DE 102016000291
(71) Anmelder: Senvion GmbH, 22297 Hamburg (DE)
(72) Erfinder: FUGLSANG-PETERSEN, Jochen, 24613 Aukrug (DE); KRESSDORF, Jörn, 24991 Großsold (DE); BONEß, Jan, 24576 Hitzhusen (DE); REIMERS, Hauke, 24782 Büdelsdorf (DE)
(74) Vertreter: Seemann & Partner Patentanwälte mbB

(57) **Zusammenfassung**

Die Erfindung betrifft ein Verfahren zum Herstellen einer Flanschverbindung (30) zwischen zwei Bauteilen einer Windenergieanlage, insbesondere zwischen einem Rotorblatt und einer Rotornabe oder zwischen einer Rotornabe und einer Rotorwelle, eine Verwendung, eine entsprechende Flanschverbindung (30) sowie eine Windenergieanlage.

Erfindungsgemäß weist ein erstes Bauteil einen ersten Flanschring (32) und ein zweites Bauteil einen zum ersten Flanschring (32) passenden zweiten Flanschring (34) auf, wobei der erste Flanschring (32) und der zweite Flanschring (34) eine Mehrzahl von in Umfangsrichtung voneinander beabstandeten und zueinander passenden Durchgangsbohrungen (36, 38) aufweisen, durch die zur Herstellung der Flanschverbindung (30) Dehnbolzen (10) mit tailliertem Schaft (18) geführt sind, wobei wenigstens einige der Dehnbolzen (10) mit jeweils einer Zentrierhülse (20, 20') ausgestattet sind, die jeweils auf dem taillierten Schaft (18) des Dehnbolzens (10) aufgesetzt sind.

## Beschreibung

Die Erfindung betrifft ein Verfahren zum Herstellen einer Flanschverbindung zwischen zwei Bauteilen einer Windenergieanlage, insbesondere zwischen einem Rotorblatt und einer Rotornabe oder zwischen einer Rotornabe und einer Rotorwelle, eine Verwendung, eine entsprechende Flanschverbindung sowie eine Windenergieanlage.

Diverse hochbelastete Verbindungen in Windenergieanlagen werden als Flanschverbindungen ausgeführt, beispielsweise die Verbindung von Rotorblättern mit der Rotornabe oder die Verbindung der Rotornabe mit der Rotorwelle. Bei solchen Flanschverbindungen sollten die Bolzen relativ flexibel und der Flansch möglichst steif ausgebildet sein, um so die Ermüdungsfestigkeit des Bolzens zu erhöhen. Üblicherweise verwendete Bolzen weisen mit einem Gewinde versehene Endabschnitte auf, die in Gewindebohrungen in den Flanschen der beiden zu verbindenden Bauteile oder auf wenigstens einer Seite in eine Mutter eingreifen. Neuere Bolzenkonstruktionen, insbesondere Blattbolzen, weisen einen Schaftabschnitt mit reduziertem Durchmesser zwischen den Gewindeendabschnitten auf, um die Axial- und Biegeflexibilität des Bolzens zu erhöhen und um ausreichende Dehnung und somit Ermüdungsfestigkeit konstruktiv zu gewährleisten.

Entsprechende Dehnbolzen und Flanschbefestigungen sind beispielsweise aus DE 10 2011 050 966 A1 bekannt. Nach der darin beschriebenen technischen Lehre wird eine Blattbolzenkonstruktion angegeben, die Biege- oder Ermüdungsbelastungen reduziert, ohne an der gesamten Höchstlastfestigkeit des Bolzen einzubüßen. Dafür ist der Schaft nicht zylindrisch ausgebildet und enthält wenigstens eine abgeflachte Seite. Dieses Schaftprofil verleiht dem Bolzen vorteilhafte Last- und Ermüdungseigenschaften.

Unabhängig davon, ob der taillierte Schaft ein zylindrisches oder ein nicht zylindrisches Profil aufweist, ergibt es sich bei bekannten Dehnbolzen mit tailliertem Schaft, dass die Bolzen für sich in der jeweiligen Bohrung des Lagers azentrisch positioniert sein können, wenn das Rotorblatt montiert ist, so dass es zu einem Versatz zwischen dem Lochkreis des Flansches des ersten Bauteils und dem Lochkreis des Flansches des zweiten Bauteils kommen kann. Bei einer gegebenenfalls erforderlichen Demontage eines oder mehrerer Bolzen wird durch die gegebenenfalls nicht mittige Position des Bolzens in der Durchgangsbohrung des Lagers dessen Herausnehmen aus der Durchgangsbohrung erschwert oder gar verhindert, weil dann das "dickere" Ende des Bolzens an den versetzten Lochkreis des Lagers stößt. Eine Demontage eines oder mehrerer Bolzen ist unter solchen Umständen nur mit Kraneinsatz und somit sehr hohen Kosten möglich.

Demgegenüber liegt der vorliegenden Erfindung die Aufgabe zugrunde, Flanschverbindungen zwischen zwei Bauteilen einer Windenergieanlage unter Vermeidung der oben genannten Probleme zu verbessern.

Diese der Erfindung zugrunde liegende Aufgabe wird durch ein Verfahren zum Herstellen einer Flanschverbindung zwischen zwei Bauteilen einer Windenergieanlage, insbesondere zwischen einem Rotorblatt und einer Rotornabe oder zwischen einer Rotornabe und einer Rotorwelle, mit folgenden Verfahrensschritten gelöst:
- eine Mehrzahl von Dehnbolzen mit tailliertem Schaft wird mit Zentrierhülsen versehen, wobei die Zentrierhülsen in einem offenen oder geteilten Zustand auf die tailiierten Schäfte der Dehnbolzen aufgesetzt und anschließend geschlossen werden,
- die zwei miteinander zu verbindenden Bauteile werden zueinander ausgerichtet, so dass Durchgangsbohrungen an einem ersten Flanschring des ersten Bauteils mit Durchgangsbohrungen an einem zweiten Flanschring des zweiten Bauteils fluchten,
- zum Zentrieren der Bauteile zueinander werden durch wenigstens einige oder alle der Durchgangsbohrungen Dehnbolzen mit aufgesetzten Zentrierhülsen gesteckt,
- die Flanschverbindung wird durch Verschraubung der Dehnbolzen hergestellt.

Die Erfindung beruht auf dem Grundgedanken, die vorhandene Konstruktion der Flanschverbindung lediglich mit geeigneten Zentrierhülsen zu ergänzen, die dauerhaft mit dem jeweiligen Dehnbolzen verbunden sein sollten. Die Verwendung solcher mit Zentrierhülsen versehener Dehnbolzen realisiert eine formschlüssige Zentrierung bei der Montage. Somit wird mittels der erfindungsgemäß verwendeten Zentrierhülsen ein Verkanten der Dehnbolzen in den Durchgangsbohrungen bzw. einen Versatz der Flansche zueinander effektiv unterdrückt, so dass die gewünschte Zentrierung der Bauteilflansche zueinander gesichert ist und eine gegebenenfalls nachträglich erforderliche Demontage einzelner Dehnbolzen möglich ist.

Die Zentrierhülsen bieten weitere Vorteile. So sind sie bei Blattmontagen nachrüstbar, so dass eine komplette Um- oder Neukonstruktion der Flanschverbindung nicht notwendig ist. Sie sind einfach zu handhaben und preisgünstig. Sie haben auch keinen Einfluss auf die Nachweisführung zur Festigkeit und Dauerhaftigkeit der Flanschverbindung, da sie keine Lasten übernehmen und die Dehnbolzen an sich nicht verändert werden müssen. Durch ihre zentrierende Wirkung wirken sie allerdings positiv in diesen Belangen. Sie sind bei verschiedenen Flanschverbindungen in Windenergieanlagen verwendbar, etwa bei Flanschverbindungen von Rotorblättern zur Nabe, von der Nabe zur Rotorwelle, oder im Azimut der Anlage.

Wenn nach dem Einstecken aller vorgesehenen Dehnbolzen mit aufgesetzten Zentrierhülsen in Durchgangsbohrungen Dehnbolzen ohne Zentrierhülsen in die übrigen Durchgangsbohrungen gesteckt werden, ist eine besonders kostengünstige Vorgehensweise realisiert. Bereits eine verhältnismäßig geringe Anzahl von mit Zentrierhülsen ausgestatteten Dehnbolzen reicht aus, die Bauteile exakt aufeinander zu zentrieren, so dass der Zentrierungseffekt für alle Dehnbolzen eintritt. Dadurch, dass nicht alle, gegebenenfalls sogar nur ein geringer Teil der Dehnbolzen mit Zentrierhülsen versehen werden müssen, werden sowohl die Kosten als auch der Aufwand in engen Grenzen gehalten. Besonders vorteilhaft werden Dehnbolzen mit Zentrierhülsen in festen Winkelabständen, insbesondere in Winkelabständen von 30°, zueinander in der Flanschverbindung eingesetzt. Auch andere Winkelabstände, beispielsweise 10°, 12°, 15°, 18°, 20°, 24°, 36°, 40°, 45° oder 60° sind je nach erforderlicher Festigkeit und verwendeter Stärke der Dehnbolzen vorteilhaft. Vorteilhafterweise wird die Flanschverbindung durch Verschraubung der Dehnbolzen während des Einsteckens oder nach dem Einstecken der Dehnbolzen in die Durchgangsbohrungen hergestellt.

Die der Erfindung zugrunde liegende Aufgabe wird auch durch eine Verwendung von Zentrierhülsen an Dehnbolzen zum Herstellen einer Flanschverbindung zwischen zwei Bauteilen einer Windenergieanlage, insbesondere in einem zuvor beschriebenen erfindungsgemäßen Verfahren, gelöst. Diese Verwendung realisiert die gleichen Eigenschaften und Vorteile wie das zuvor beschriebene erfindungsgemäße Verfahren.

Die der Erfindung zugrunde liegende Aufgabe wird weiter durch eine Flanschverbindung zwischen zwei Bauteilen einer Windenergieanlage, insbesondere zwischen einem Rotorblatt und einer Rotornabe oder zwischen einer Rotornabe und einer Rotorwelle, insbesondere hergestellt oder herstellbar in einem zuvor beschriebenen erfindungsgemäßen Verfahren, gelöst, wobei ein erstes Bauteil einen ersten Flanschring aufweist und ein zweites Bauteil einen zum ersten Flanschring passenden zweiten Flanschring aufweist, wobei der erste Flanschring und der zweite Flanschring eine Mehrzahl von in Umfangsrichtung voneinander beabstandeten und zueinander passenden Durchgangsbohrungen aufweisen, durch die zur Herstellung der Flanschverbindung Dehnbolzen mit tailliertem Schaft geführt sind, die dadurch weitergebildet ist, dass wenigstens einige der Dehnbolzen mit jeweils einer Zentrierhülse ausgestattet sind, die jeweils auf dem taillierten Schaft des Dehnbolzens aufgesetzt sind.

Auch die erfindungsgemäße Flanschverbindung verkörpert die zuvor zum erfindungsgemäßen Verfahren genannten Merkmale, Eigenschaften und Vorteile.

Vorzugsweise ist die Zentrierhülse teilbar und nach Aufsetzen auf den taillierten Schaft eines Dehnbolzens zusammenfügbar, insbesondere mittels eines an der Zentrierhülse vorgesehenen Schnellverschlusses. Dies bedeutet, dass die Zentrierhülse in der Vorbereitung der Montage auf die Dehnbolzen aufsetzbar und nach Bedarf einsetzbar ist. Ein Schnellverschluss kann beispielsweise als form- und kraftschlüssiges Passelement in der Zentrierhülse ausgebildet sein. Die Zentrierhülse kann aus zwei oder mehr Teilen zusammengesetzt werden oder aber über ein Scharnier verfügen und zusammenklappbar sein. Die Zentrierhülsen können vorzugsweise hälftig geteilt sein oder asymmetrisch, aber auch aus drei oder mehr gleich großen oder ungleichen Teilen zusammengesetzt oder zusammensetzbar sein.

Vorzugsweise bestehen die Zentrierhülsen ganz oder wenigstens teilweise aus Nylon, Teflon oder einem anderen festen Kunststoffmaterial. Diese festen Kunststoffmaterialien sorgen für eine ausreichende strukturelle Stabilität der Zentrierhülsen, um den bei der Montage auftretenden Belastungen standhalten zu können. Sie haben gleichzeitig eine glatte Oberflächenstruktur, die ein müheloses Einschieben der Dehnbolzen mit den Zentrierhülsen in die Durchgangsbohrungen der Flanschverbindung ermöglicht.

Um eine genaue Passung in die Durchgangsbohrungen zu gewährleisten, ist vorzugsweise vorgesehen, dass ein maximaler Außendurchmesser der Zentrierhülsen wenigstens einem Außendurchmesser eines Gewindes eines Dehnbolzens entspricht und/oder so dimensioniert ist, dass die Zentrierhülsen in Durchgangsbohrungen am ersten und/oder zweiten Flanschring passen, wenn diese aufeinander zentriert sind. Letztere Alternative schließt ein, dass die Zentrierhülsen einen gleich großen oder geringfügig kleineren Außendurchmesser haben wie bzw. als die Innendurchmesser der Durchgangsbohrungen, solange sie eine zentrierende Wirkung haben.

Um vorteilhafterweise ein Verkanten oder Verhaken der Dehnbolzen in den Durchgangslöchern während der Montage aufgrund der Zentrierhülsen zu vermeiden, ist in einer vorteilhaften Weiterbildung vorgesehen, dass ein Ende der Zentrierhülsen oder beide Enden der Zentrierhülsen konisch zulaufend ausgebildet sind, wobei die Zentrierhülsen in einem Mittelteil zylindrisch oder bauchig ausgebildet sind. Alternativ können die Zentrierhülsen auch komplementär zum taillierten Schaft ausgebildet sein.

Vorzugsweise sind Dehnbolzen mit Zentrierhülsen in festen Winkelabständen, insbesondere in Winkelabständen von 30°, zueinander in der Flanschverbindung eingesetzt. Damit wird lediglich eine Untergruppe aller Dehnbolzen der Flanschverbindung mit Zentrierhülsen ausgestattet. Dies sorgt dafür, dass die Kosten und der Aufwand hierbei gering bleiben, wobei dennoch bereits durch diese Untergruppe von mit Zentrierhülsen ausgestatteten Dehnbolzen eine exakte Zentrierung der beiden Flanschringe aufeinander und eine exakte Flucht der Durchgangsbohrungen zueinander jeweils gewährleistet sind. Bei vorteilhafterweise festen und gleichen Winkelabständen von beispielsweise 10°, 12°, 15°, 18°, 20°, 24°, 30°, 36°, 40°, 45° oder 60° handelt es sich entsprechend um 36, 30, 24, 20, 18, 15, 12, 9, 8 bzw. 6 Dehnbolzen, die mit Zentrierhülsen versehen sind oder sein können. Es können im Rahmen der Erfindung aber auch mehr oder weniger sein, wobei die Winkelabstände entsprechend geändert sind. Es kann eine gerade oder ungerade Anzahl von Dehnbolzen mit Zentrierhülsen ausgestattet werden, wobei eine Anzahl von drei vorzugsweise nicht unterschritten werden sollte, um die Zentrierung der Flanschverbindung insgesamt zu gewährleisten. Die Dehnbolzen mit Zentrierhülsen sollten mehr oder weniger gleichmäßig um den Umfang des Ringflansches verteilt werden.

Die der Erfindung zugrunde liegende Aufgabe wird ferner durch eine Windenergieanlage mit einer zuvor beschriebenen erfindungsgemäßen Flanschverbindung zwischen zwei Bauteilen gelöst, insbesondere zwischen einem Rotorblatt und einer Rotornabe oder zwischen einer Rotornabe und einer Rotorwelle. Auch ein Turmflansch oder der Flansch, der die Gondel auf dem Turm hält, kann entsprechend ausgestattet sein. Die erfindungsgemäße Windenergieanlage verkörpert die gleichen Vorteile, Merkmale und Eigenschaften wie das erfindungsgemäße Verfahren, die erfindungsgemäße Verwendung und die erfindungsgemäße Flanschverbindung.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Querschnittsdarstellung durch einen Ausschnitt eines Dehnbolzens mit einer Zentrierhülse,
- Fig. 2: eine schematische Querschnittsdarstellung gemäß Fig. 1 quer zur Längserstreckung,
- Fig. 3: eine schematische Querschnittsdarstellung durch eine erfindungsgemäße Flanschverbindung und
- Fig. 4: eine schematische Darstellung eines weiteren Ausführungsbeispiels einer Zentrierhülse.

In den Zeichnungen sind jeweils gleiche oder gleichartige Elemente und/oder Teile mit denselben Bezugsziffern versehen, so dass von einer erneuten Vorstellung jeweils abgesehen wird.

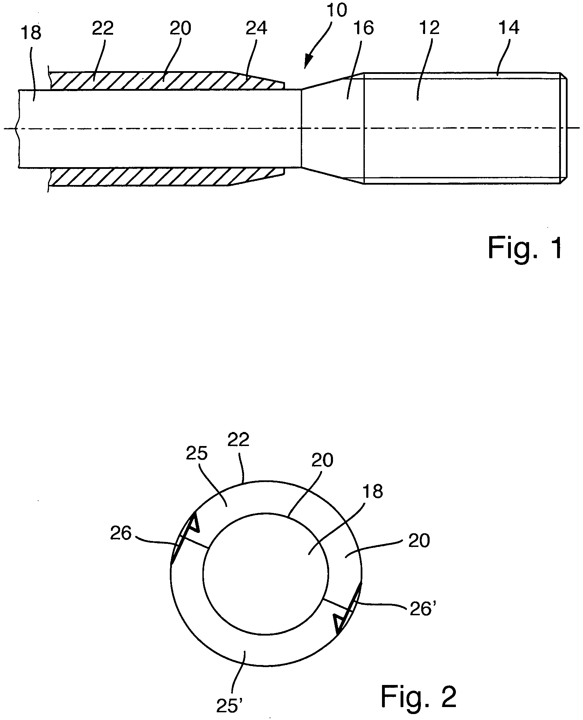

Fig. 1 zeigt schematisch einen Querschnitt durch einen Teil eines Dehnbolzens 10 mit aufgesetzter Zentrierhülse 20. Von dem Dehnbolzen 10 ist lediglich eine Seite dargestellt, der sich im Wesentlichen spiegelbildlich nach links fortsetzt. Der Dehnbolzen 10 weist an seinem Ende einen Bolzenkopf 12 mit Außengewinde 14 auf, der sich in einem konischen Abschnitt 16 zu einem taillierten Schaft 18 hin verjüngt. Nicht dargestellt ist das andere Ende, das spiegelbildlich ausgeführt ist, wobei sich der taillierte Schaft 18 wieder erweitert zu einem weiteren Bolzenkopf 12 mit Außengewinde 14.

Auf den taillierten Schaft 18 ist eine Zentrierhülse 20 aufgesetzt, die einen zylindrischen Abschnitt 22 aufweist, sowie ein konusförmiges Ende 24, an dem sich der Außendurchmesser der Zentrierhülse 20 verringert, so dass sich zwischen dem konusförmigen Ende 24 der Zentrierhülse 20 und dem verjüngenden Abschnitt 16 des Dehnbolzens 10 eine umlaufende verjüngte Stelle oder "Delle" ergibt.

Der Außendurchmesser der Zentrierhülse 20 entspricht in diesem Ausführungsbeispiel im Wesentlichen dem äußeren Durchmesser des Gewindes 14 am Dehnbolzen 10. Durch die Zentrierhülse 20 wird dem Dehnbolzen 10 ein im Wesentlichen einheitlicher Außendurchmesser verliehen, der dafür sorgt, dass ein solcher Dehnbolzen 10 trotz des taillierten Schafts 18 passgenau und mit guter Zentrierung in Durchgangsbohrungen von Flanschgewinden einführbar ist, ohne zu verkanten, bzw. ohne dass es zu einem Versatz der Lochkreise der Flansche kommt. Eine solche Zentrierhülse 20 ist vorzugsweise aus einem festen Kunststoffmaterial hergestellt, das die entsprechenden mechanischen Beanspruchungen bei der Zentrierung aushält. Beispiele hierfür sind etwa Nylon oder Teflon, was den weiteren Vorteil hat, dass die Oberfläche sehr reibungsarm ist und das Ein- und Ausführen des mit der entsprechend ausgebildeten Zentrierhülse 20 ausgestatteten Dehnbolzens 10 in einem Durchgangsloch einer Flanschverbindung sehr reibungsarm und damit einfach vonstattengeht.

In Fig. 2 ist ein Querschnitt quer zur Längserstreckung des Dehnbolzens 10 aus Fig. 1 dargestellt, wobei im Zentrum der taillierte Schaft 18 des Dehnbolzens 10 dargestellt ist, um den der zylindrische Teil der Zentrierhülse 20 herum angeordnet ist. Schwarz sind beispielhaft zwei Schnellverschlüsse 26, 26' eingezeichnet, die durch eine entsprechende Passform und Elastizität einen form- und kraftschlüssigen Schluss der beiden Hälften 25, 25' der Zentrierhülse 20 herstellen.

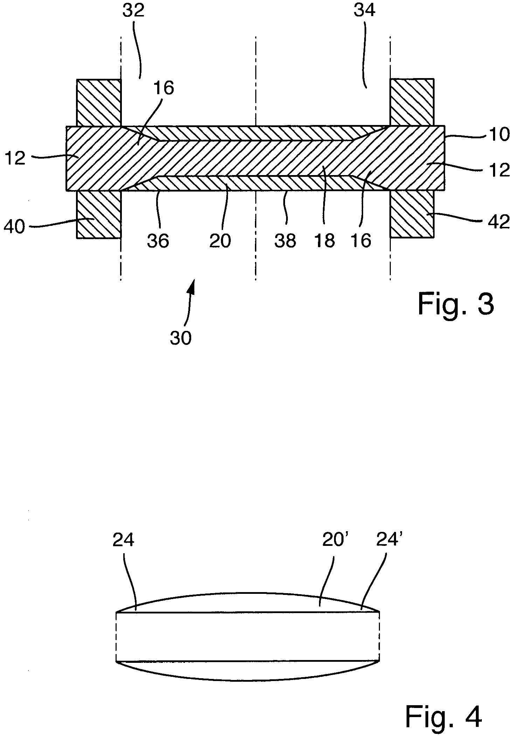

Fig. 3 zeigt schematisch einen Querschnitt durch eine erfindungsgemäße Flanschverbindung 30 mit zwei Flanschringen 32, 34 eines ersten und eines zweiten Bauteils einer Windenergieanlage, die zwei zueinander fluchtende Durchgangsbohrungen 36, 38 aufweisen. Durch diese dadurch entstehende gemeinsame Durchgangsbohrung 36, 38 ist ein Dehnbolzen 10 gemäß Fig. 1 geführt, der an seinen Bolzenköpfen 12 jeweils nicht dargestellte Außenverschraubungen gemäß Fig. 1 aufweist, auf die außerhalb der Durchgangsbohrung 36, 38 jeweils eine Bolzenmutter 40, 42 aufgeschraubt ist, mit der die Flanschverbindung 30 festgeschraubt wird. Auf einem taillierten Abschnitt 18 des Dehnbolzens 10 ist eine Zentrierhülse 20 aufgesetzt, die in diesem Fall nicht konisch abflacht, sondern im Innendurchmesser den Außendurchmesser des Dehnbolzens 10 einschließlich seiner sich verjüngenden Abschnitte 16 widerspiegelt. Eine exakte Zentrierung ist auf diese Weise gewährleistet.

Fig. 4 stellt schematisch einen Querschnitt durch ein weiteres Ausführungsbeispiel einer erfindungsgemäßen Zentrierhülse 20' dar, die bei einem zylindrischen Innenraum eine bauchige Außenkontur aufweist, wobei der Außendurchmesser von den beiden Enden her zur Mitte hin zunimmt. Eine solche Form ist ebenfalls vorteilhaft, da sie das Ein- und Ausführen aufgrund der gewölbten Form erleichtert und gleichzeitig ihren maximalen Außendurchmesser an der Stelle aufweist, wo sich die Schnittstelle zwischen den aufeinanderliegenden Flanschringen des ersten und des zweiten Bauteils befindet, so dass die Zentrierfunktion der Zentrierhülse 20' vollständig gewährleistet ist.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 10: Dehnbolzen
- 12: Bolzenkopf
- 14: Gewinde
- 16: verjüngender Abschnitt
- 18: taillierter Schaft
- 20: Zentrierhülse
- 20': bauchige Zentrierhülse
- 22: zylindrischer Abschnitt
- 24, 24': konusförmiges Ende
- 25, 25': Hülsenhälfte
- 26, 26': Schnellverschluss
- 30: Flanschverbindung
- 32: erster Flanschring
- 34: zweiter Flanschring
- 36: Durchgangsbohrung
- 38: Durchgangsbohrung
- 40: Bolzenmutter
- 42: Bolzenmutter

## Patentansprüche

1. Verfahren zum Herstellen einer Flanschverbindung (30) zwischen zwei Bauteilen einer Windenergieanlage, insbesondere zwischen einem Rotorblatt und einer Rotornabe oder zwischen einer Rotornabe und einer Rotorwelle, mit folgenden Verfahrensschritten:
- eine Mehrzahl von Dehnbolzen (10) mit tailliertem Schaft (18) wird mit Zentrierhülsen (20, 20') versehen, wobei die Zentrierhülsen (20, 20') in einem offenen oder geteilten Zustand auf die tailiierten Schäfte (18) der Dehnbolzen (10) aufgesetzt und anschließend geschlossen werden,
- die zwei miteinander zu verbindenden Bauteile werden zueinander ausgerichtet, so dass Durchgangsbohrungen (36) an einem ersten Flanschring (32) des ersten Bauteils mit Durchgangsbohrungen (38) an einem zweiten Flanschring (34) des zweiten Bauteils fluchten,
- zum Zentrieren der Bauteile zueinander werden durch wenigstens einige oder alle der Durchgangsbohrungen (36, 38) Dehnbolzen (10) mit aufgesetzten Zentrierhülsen (20, 20') gesteckt,
- die Flanschverbindung (30) wird durch Verschraubung der Dehnbolzen (10) hergestellt.

2. Verfahren nach Anspruch 1, **dadurch gekennzeichnet, dass** nach dem Einstecken aller vorgesehenen Dehnbolzen (10) mit aufgesetzten Zentrierhülsen (20, 20') in Durchgangsbohrungen (36, 38) Dehnbolzen (10) ohne Zentrierhülsen (20, 20') in die übrigen Durchgangsbohrungen (36, 38) gesteckt werden.

3. Verfahren nach Anspruch 1 oder 2, **dadurch gekennzeichnet, dass** Dehnbolzen (10) mit Zentrierhülsen (20, 20') in festen Winkelabständen, insbesondere in Winkelabständen von 30°, zueinander in der Flanschverbindung (30) eingesetzt werden.

4. Verfahren nach einem der Ansprüche 1 bis 3, **dadurch gekennzeichnet, dass** während des Einsteckens oder nach dem Einstecken der Dehnbolzen (10) in die Durchgangsbohrungen (36, 38) die Flanschverbindung (30) durch Verschraubung der Dehnbolzen (10) hergestellt wird.

5. Verwendung von Zentrierhülsen (20, 20') an Dehnbolzen (10) zum Herstellen einer Flanschverbindung (30) zwischen zwei Bauteilen einer Windenergieanlage in einem Verfahren nach einem der Ansprüche 1 bis 4.

6. Flanschverbindung (30) zwischen zwei Bauteilen einer Windenergieanlage, insbesondere zwischen einem Rotorblatt und einer Rotornabe oder zwischen einer Rotornabe und einer Rotorwelle, insbesondere hergestellt oder herstellbar in einem Verfahren nach einem der Ansprüche 1 bis 4, wobei ein erstes Bauteil einen ersten Flanschring (32) aufweist und ein zweites Bauteil einen zum ersten Flanschring (32) passenden zweiten Flanschring (34) aufweist, wobei der erste Flanschring (32) und der zweite Flanschring (34) eine Mehrzahl von in Umfangsrichtung voneinander beabstandeten und zueinander passenden Durchgangsbohrungen (36, 38) aufweisen, durch die zur Herstellung der Flanschverbindung (30) Dehnbolzen (10) mit tailliertem Schaft (18) geführt sind, **dadurch gekennzeichnet, dass** wenigstens einige der Dehnbolzen (10) mit jeweils einer Zentrierhülse (20, 20') ausgestattet sind, die jeweils auf dem taillierten Schaft (18) des Dehnbolzens (10) aufgesetzt sind.

7. Flanschverbindung (30) nach Anspruch 6, **dadurch gekennzeichnet, dass** die Zentrierhülse (20, 20') teilbar ist und nach Aufsetzen auf den taillierten Schaft (18) eines Dehnbolzens (10) zusammenfügbar ist, insbesondere mittels eines an der Zentrierhülse (20, 20') vorgesehenen Schnellverschlusses (26, 26').

8. Flanschverbindung (30) nach Anspruch 6 oder 7, **dadurch gekennzeichnet, dass** die Zentrierhülsen (20, 20') aus Nylon, Teflon oder einem anderen festen Kunststoffmaterial ganz oder wenigstens teilweise bestehen.

9. Flanschverbindung (30) nach einem der Ansprüche 6 bis 8, **dadurch gekennzeichnet, dass** ein maximaler Außendurchmesser der Zentrierhülsen (20, 20') wenigstens einem Außendurchmesser eines Gewindes (14) eines Dehnbolzens (10) entspricht und/oder so dimensioniert ist, dass die Zentrierhülsen (20, 20') in Durchgangsbohrungen (36, 38) am ersten und/oder zweiten Flanschring (36, 38) passen, wenn diese aufeinander zentriert sind.

10. Flanschverbindung (30) nach einem der Ansprüche 6 bis 9, **dadurch gekennzeichnet, dass** ein Ende (24, 24') der Zentrierhülsen (20, 20') oder beide Enden (24, 24') der Zentrierhülsen (20, 20') konisch zulaufend ausgebildet sind, wobei die Zentrierhülsen (20, 20') in einem Mittelteil zylindrisch oder bauchig ausgebildet sind.

11. Flanschverbindung (30) nach einem der Ansprüche 6 bis 10, **dadurch gekennzeichnet, dass** Dehnbolzen (10) mit Zentrierhülsen (20, 20') in festen Winkelabständen, insbesondere in Winkelabständen von 30°, zueinander in der Flanschverbindung (30) eingesetzt sind.

12. Windenergieanlage mit einer Flanschverbindung (30) zwischen zwei Bauteilen nach einem der Ansprüche 6 bis 11, insbesondere zwischen einem Rotorblatt und einer Rotornabe oder zwischen einer Rotornabe und einer Rotorwelle.
